# EUROPEAN PATENT SPECIFICATION

(11) **EP 2 085 637 B1**
(45) Date of publication and mention of the grant of the patent: **12.12.2012**
(21) Application number: 07830308.8
(22) Date of filing: 22.10.2007
(51) Int. Cl.: F16D 65/092

(54) **FRICTION PAD ASSEMBLY FOR DISK BRAKE**
BREMSBACKENANORDNUNG FÜR SCHEIBENBREMSE
ENSEMBLE PLAQUETTE DE FREIN POUR FREIN À DISQUE

(30) Priority: 25.10.2006 JP 2006290341; 03.10.2007 JP 2007260174
(43) Date of publication of application: 05.08.2009
(60) Divisional application: 11004448.4
(73) Proprietor: Akebono Brake Industry Co., Ltd., Tokyo 103-8534 (JP)
(72) Inventor: MAEHARA, Toshifumi, Tokyo 103-8534 (JP); MAKISHIMA, Takuya, Tokyo 103-8534 (JP); FURUKAWA, Hitoshi, Tokyo 103-8534 (JP)
(74) Representative: Grünecker, Kinkeldey, Stockmair & Schwanhäusser
(86) International application number: PCT/JP2007/070574
(87) International publication number: WO 2008/050728

(56) References cited:
- EP-A1- 0 102 469
- EP-A1- 1 318 321
- DE-U1- 8 514 607
- JP-A- 10 507 250
- JP-A- 2006 194 429
- JP-T- 10 507 250
- JP-U- 07 041 089
- US-A- 5 538 108

## Description

### Technical Field:

The present invention relates to a disc brake friction pad assembly in which a plurality of lining assemblies are pivotally supported on a guide plate that receives braking torque and which generates a braking force by sliding friction when the lining assemblies are pressed against a disc rotor. More specifically, the present invention relates to improvement for realizing a cost saving and an improvement in productivity by relaxing the processing accuracy of parts to be used and a reduction in the number of components.

### Background Art:

A disc brake device includes a disc rotor to be fixed to an axle, a friction pad assembly in which a lining member is assembled onto a disc rotor-side face of a torque receiving plate, arranged facing the disc rotor, and a brake caliper fixed to a vehicle frame while incorporating an actuator that drives the toque receiving plate so as to advance and retract with respect to the disc rotor, and generates a braking force by sliding friction when the lining member is pressed against the disc rotor as a result of advancing the torque receiving plate toward the disc rotor side.

In a disc brake device for a railcar, since the disc rotor and the friction pad assembly are large-sized, when the lining member to be pressed against the disc rotor is formed by an integral part, a non-contact region is increased due to waving and the like caused in the disc rotor by frictional heat and the like, so that a stable friction area cannot be maintained, and stable braking characteristics cannot be obtained.

Therefore, in order to solve such problems, a friction pad assembly has been proposed, for which a plural number of second link plates are almost planarly laid on a torque receiving plate, a large number of first link plates are pivotally laid on each second link plate independent of each other, and a large number of lining assemblies are pivotally disposed on each first link plate independent of each other, so that by a movement of the torque receiving plate toward the side of a disc rotor, each lining assembly on each link plate is made to contact the disc rotor (see Patent Document 1, for example).

In the friction pad assembly thus constructed, each of the lining assemblies divided into small parts follows waving on the disc rotor surface by a separate pivoting operation to make contact with the disc rotor surface, so that stable braking characteristics can be maintained, while a stable friction area is maintained.

Patent Document 1: JP-T-10-507250

### Disclosure of the Invention

### <Problems to be Solved by the Invention>

In the friction pad assembly described in the above Patent Document 1, a position restriction of the lining assembly on the torque receiving plate is, in both a direction parallel to the surface of the lining assembly and a direction orthogonal to the surface of the lining assembly, performed by a first universal joint that pivotally connects the lining assembly to the first link plate by a spherical contact portion.
In addition, a position restriction of the second plate on the first plate is also, in both a direction parallel to the surface of the lining assembly and a direction orthogonal to the surface of the lining assembly, performed by a second universal joint that pivotally connects the first link plate to the second link plate by a spherical contact portion.

As a result, braking torques that act on the lining assemblies at the time of braking are all transmitted, via the spherical contact portions of the universal joints, from the lining assemblies to the first link plates, and from the first link plates to the second link plates, in order, and finally, transmitted to the torque receiving plate to which the second link plates are connected, so that an excessive load may concentrate on some universal joints to cause breakage unless each universal joint has been solidly constructed and the spherical contact portion of each universal joint has been machined with high accuracy.

However, since the universal joints are used in many positions, if it becomes necessary to provide all universal joints as solid constructions and machine the spherical contact portions thereof and opposite contact portions with which the spherical contact portions make contact with high accuracy, there has been a problem that the machining costs of the parts add up, which causes an increase in cost of the friction pad assembly and a decline in productivity.

Moreover, although it is necessary to contrive a holding structure of the lining assembly so that the lining assembly does not unexpectedly drop off in conveyance of the friction pad assembly, in maintenance of the disc brake device, etc., if parts are therefore increased in number, there has been a problem such that the increase in the number of parts causes an increase in cost while an increase in the number of assembling processes resulting from the increase in the number of parts causes a decline in productivity.

Moreover, when the lining assembly unexpectedly rotates due to contact with the disc rotor, a loss in transmission of the braking torque is thereby generated, and thus a means for controlling rotation of the lining assembly becomes necessary, however, if the parts are therefore increased in number, in that case as well, there has been a problem such that the increase in the number of parts causes an increase in cost while an increase in the number of assembling processes resulting from the increase in the number of parts causes a decline in productivity.

Further, the disc brake friction pad assembly results in a form of a plural number of lining assemblies planarly laid side by side, and thus, without contrivance to absorb dimensional tolerance in the thickness direction of the lining assemblies, it may have become difficult to maintain stable braking characteristics because of unevenness in contact performance of each lining assembly with respect to the disc rotor occurring due to the dimensional tolerance.

Therefore, an object of the present invention is, in order to solve the above-mentioned problems, to provide a friction pad assembly that can realize a cost saving and an improvement in productivity by relaxing the machining accuracy of parts to be used and a reduction in the number of parts, and can prevent occurrence of unevenness in contact performance of each lining assembly with respect to the disc rotor by allowing dimensional tolerance in the thickness direction of the lining assemblies, and can accordingly maintain stable braking characteristics without receiving influence of the dimensional tolerance in the thickness direction of the lining assemblies.

### <Means for Solving the Problems>

The above-mentioned object is achieved by the following construction.

(1) A disc brake friction pad assembly of the invention is a disc brake friction pad assembly in which a plurality of lining assemblies are pivotally supported on a guide plate that receives a braking torque, and the lining assemblies are pressed against a disc rotor, wherein each of the lining assemblies includes, in a back plate portion fixedly attached to a back surface of a friction material, a plate fitting portion whose outer circumferential face is pivotally fitted with a guide hole portion provided in the guide plate and a retaining flange portion having an outside diameter larger than the guide hole portion, wherein a leaf spring attached to the plate fitting portion is attached by insertion to the guide hole portion from a back surface side of the guide plate so that the leaf spring is sandwiched between the guide plate and the retaining flange portion, wherein a braking torque that acts at the time of contact between the disc rotor and the friction material is transmitted from the plate fitting portion to the guide plate, wherein, between a torque receiving plate attached to the guide plate with a gap secured with respect to the back plate portion and the back plate portion, a plurality of link plates disposed to straddle over ones of the plurality of lining assemblies and for transmitting a pressing force from the torque receiving plate to the lining assemblies are provided, and wherein each of the link plates includes a single plate abutting curved surface portion that abuts to and is pivotally supported on a link supporting portion of the torque receiving plate, a plurality of back plate abutting curved surfaces portions that abut to respective link abutting portions at centers of the back plate portions of the lining assemblies to pivotally support the lining assemblies, and rotation restricting portions loosely fitted in respective engaging hole formed at positions apart from the centers of the back plate portions of the lining assemblies to restrict pivoting behaviors of the lining assemblies.

(2) In the structure of the above (1), the guide plate and the torque receiving plate abut to each other with a spacer sandwiched therebetween, and the guide plate and the torque receiving plate are formed into an integral casing structure by fastening with a rivet.

(3) In the structure of the above (1) or (2), the spacer is integrally formed with at least either of the torque receiving plate or the guide plate.

(4) In the structure of one of above (1) to (3), the plate abutting curved surface portion and a torque receiving plate-side face in a vicinity of the back plate abutting curved surface portion of the link plate abuts to the torque receiving plate, when a reaction force of the friction materials of the lining assemblies pressed against the disc rotor is input beyond a predetermined pressing force range.

### <Effects of the Invention>

By the friction pad assembly according to the present invention, a braking torque that acts on the lining assembly at the time of braking is transmitted to the guide plate, and further directly transmitted to the torque receiving plate to which the guide plate is fixed.
Moreover, a pressing force that presses the lining assembly against the disc rotor is transmitted from the torque receiving plate, via a contact portion between the link supporting portion of the torque receiving plate and the plate abutting curved surface portion of the link plate, to the link plate and acts on the lining assembly via a contact portion between the back plate abutting curved surface portion of the link plate and the link abutting portion of the lining assembly.
More specifically, the member that receives the braking torque from the lining assembly and the members that make the pressing force act on the lining assembly are set separately, so that no braking torque to be a large load acts on the contact portion between the lining assembly and the link plate and the contact portion between the link plate and the torque receiving plate, which make the pressing force act on the lining assembly.
Therefore, it is not necessary to provide each contact portion that transmits the pressing force as a solid engagement such as a ball joint to receive the braking torque, and a cost saving and an improvement in productivity by relaxing the processing accuracy can be realized.

### Brief description of the drawings:

Fig. 1 is a plan view of an embodiment of a disc brake friction pad assembly according to the present invention.
Fig. 2 is a view taken along an arrow A of Fig. 1.
Fig. 3 is a view taken along an arrow B of Fig. 2.
Fig. 4 is a view taken along an arrow C of Fig. 1.
Fig. 5 is a sectional view taken along D-D of Fig. 1.
Fig. 6 is an exploded perspective view of the friction pad assembly shown in Fig. 5.
Fig. 7 is an explanatory view of a state where link plates are exposed from the disc brake friction pad assembly shown in Fig. 3.
Fig. 8 is a view taken along an arrow E of Fig. 7.
Fig. 9 is an exploded perspective view of another embodiment of a disc brake friction pad assembly according to the present invention.
Fig. 10 is a sectional view corresponding to Fig. 5, of the friction pad assembly shown in Fig. 9.
Fig. 11 is an exploded perspective view of still another embodiment of a disc brake friction pad assembly according to the present invention.

### Description of Reference Numerals and Signs

- 1A, 1B: Friction pad assembly
- 3, 3A: Torque receiving plate
- 3a: Link supporting portion
- 5, 5A, 6, 6A: Link plate
- 8: Spacer
- 11: Guide plate
- 11a: Guide hole portion
- 13, 13A: Lining assembly
- 21: Friction material
- 22: Back plate portion
- 22a: Plate fitting portion
- 22b: Retaining flange portion
- 22c: Link abutting portion
- 22d: Engaging hole
- 28: Rivet
- 31: Anchor plate
- 35: Plate abutting curved surface portion
- 37: Back plate abutting curved surface portion
- 38: Rotation restricting portion

### Best Mode for Carrying Out the Invention:

Hereinafter, preferred embodiments of a disc brake friction pad assembly according to the present invention will be described in detail with reference to the drawings.

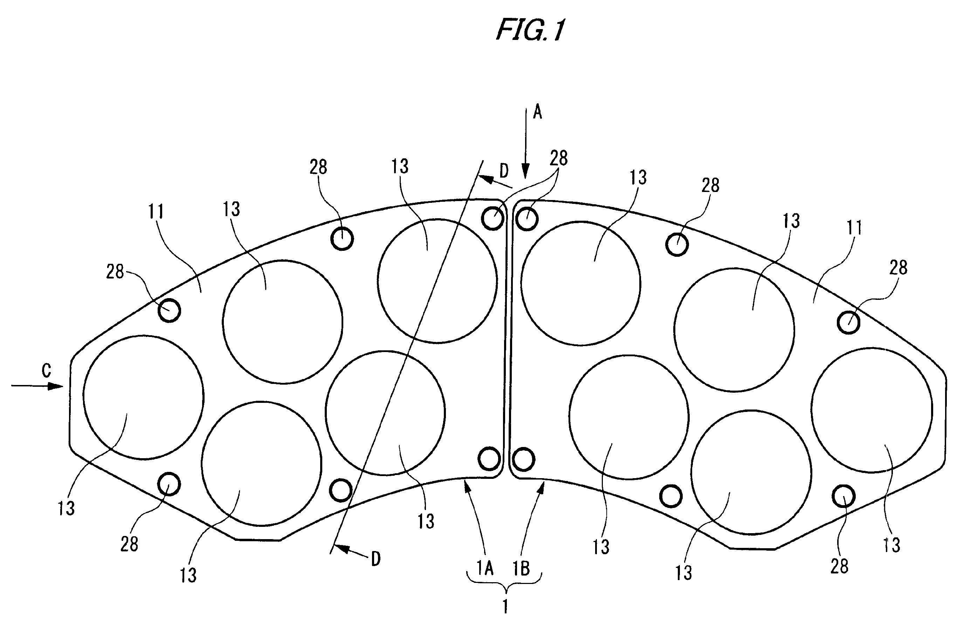

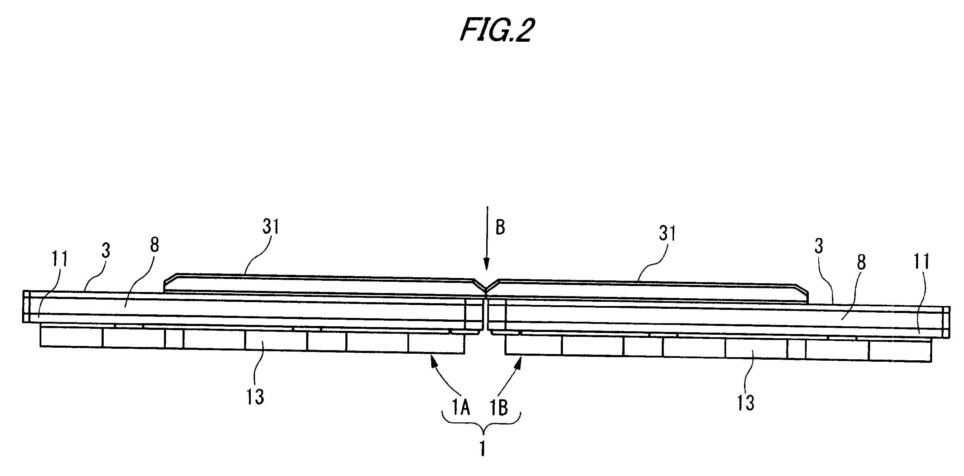

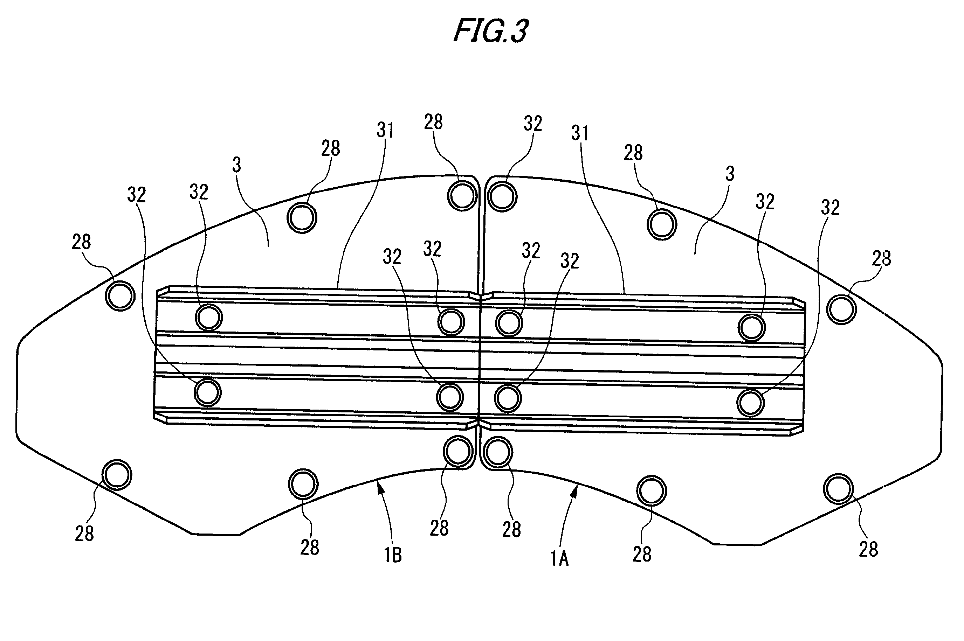

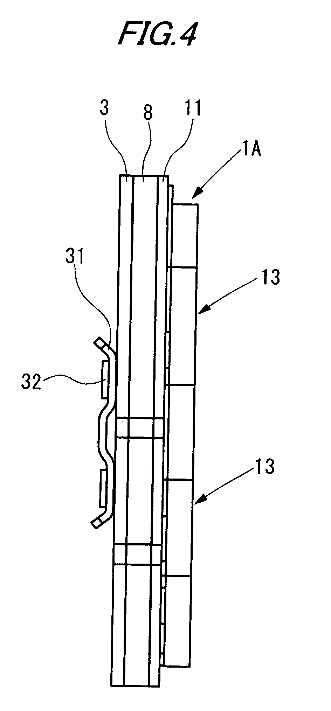

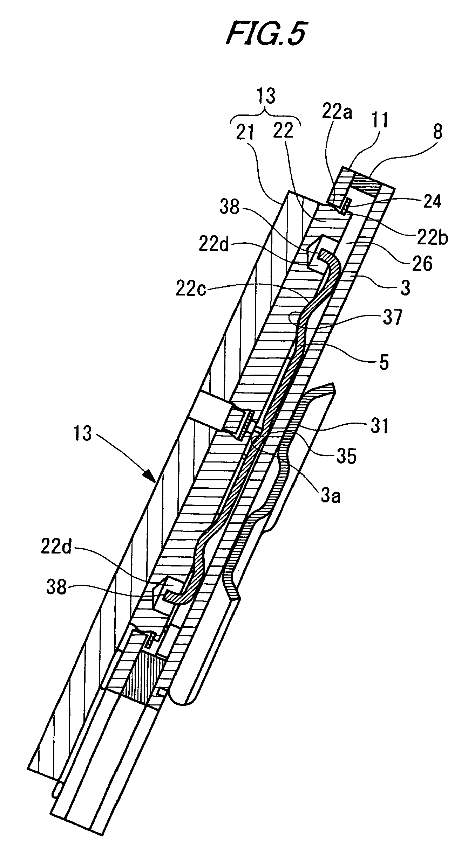

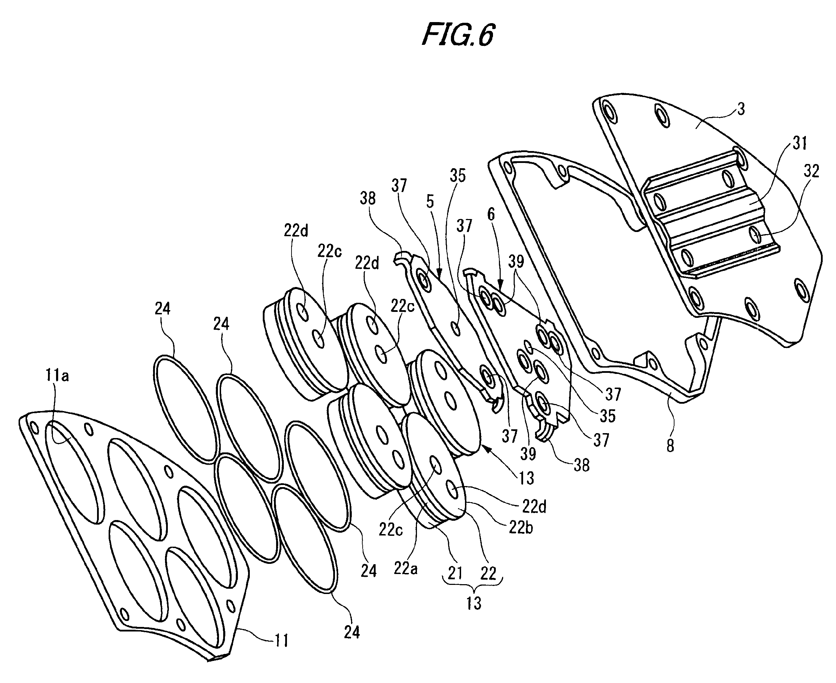

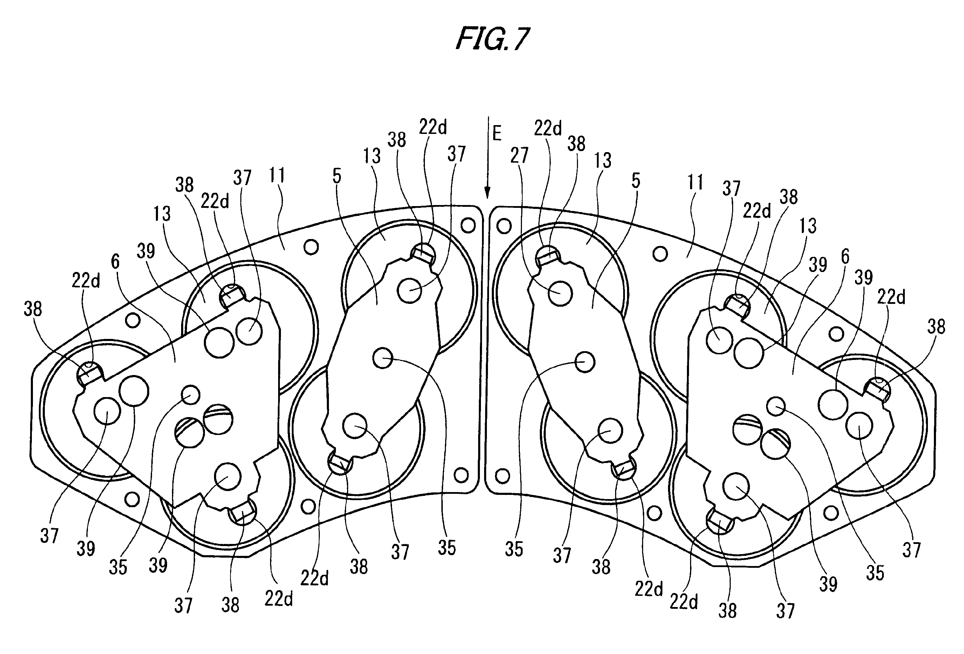

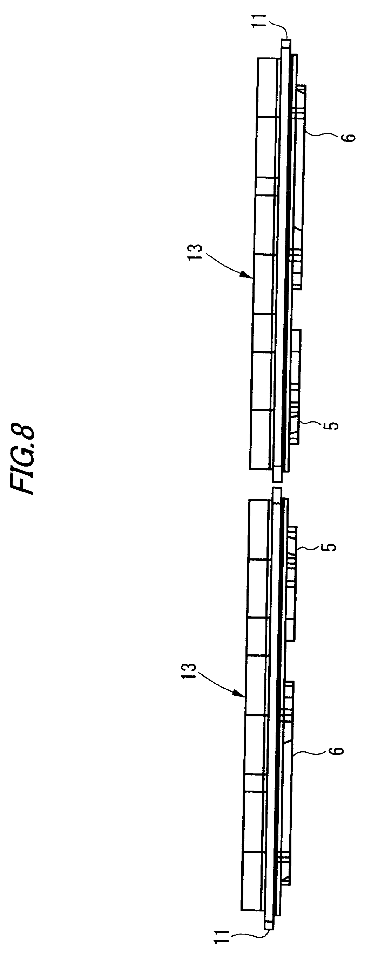

Fig. 1 to Fig. 8 show an embodiment of friction pad assemblies to the present invention, wherein Fig. 1 is a front view of the disc brake friction pad assembly, Fig. 2 is a view taken along an arrow A of Fig. 1, Fig. 3 is a view taken along an arrow B of Fig. 2, Fig. 4 is a view taken along an arrow C of Fig. 1, Fig. 5 is a sectional view taken along D-D of Fig. 1, Fig. 6 is an exploded perspective view of the friction pad assembly shown in Fig. 5, Fig. 7 is an explanatory view of a state where link plates of the disc brake friction pad assembly shown in Fig. 3 are exposed, and Fig. 8 is a view taken along an arrow E of Fig. 7.

The disc brake friction pad assembly 1 of an embodiment is used for a railcar disc brake device, and is composed of, as shown in Fig. 1 to Fig. 3, two friction pad assemblies 1A and 1B adjacently arranged in the circumferential direction of a disc rotor on an axle.
Each friction pad assembly 1A, 1B has the same construction as that of the other, and this is arranged facing the disc rotor on the axle and driven by an actuator incorporated in a brake caliper fixed to a vehicle frame so as to advance and retract with respect to the disc rotor.

Each friction pad assembly 1A, 1B is composed of, as shown in Fig. 5 and Fig. 6, a torque receiving plate 3 that is driven by an actuator incorporated in an unillustrated brake caliper so as to advance and retract with respect to the disc rotor, two types of link plates 5 and 6 that are almost planarly laid on a disc rotor-side face of the torque receiving plate 3, a guide plate 11 that is fixed by connecting at the disc rotor side of the torque receiving plate 3 to the torque receiving plate 3 via a spacer 8, and five lining assemblies 13 pivotably supported by fitting on the guide plate 11 so as to be pivotable.

The lining assembly 13 is composed of a friction material 21 molded in an almost disc shape and a back plate portion 22 fixedly attached to a back surface of the friction material 21. The back plate member 22 includes a plate fitting portion 22a whose outer circumferential face is pivotally fitted with a circular guide hole portion 11a formed in a penetrating condition through the guide plate 11 and a retaining flange portion 22b having an outside diameter larger than the guide hole portion 11a.
To the plate fitting portion 22a, an annular leaf spring 24 is attached by fitting. The outside diameter of the leaf spring 24 is set larger than the guide hole portion 11a.

Each lining assembly 13 is, so that the leaf spring 24 attached by fitting to the plate fitting portion 22a is sandwiched between the guide plate 11 and the retaining flange portion 22b, attached by insertion to the guide hole portion 11a from the back surface side of the guide plate 11, and transmits a braking torque that acts at the time of contact between the disc rotor and the friction material 21 from the plate fitting portion 22a to the guide plate 11.

The guide plate 11 is formed with five guide hole portions 11a at predetermined separation intervals, and each guide hole portion 11a is attached with the lining assembly 13.
The spacer 8 is a frame body that abuts against a marginal portion of the guide plate 11, and is sandwiched between the guide plate 11 and the torque receiving plate 3 to thereby define a link housing space 26 in which the link plates 5 and 6 are arranged between the torque receiving plate 3 and the back plate portion 22.

The guide plate 11 and the torque receiving plate 3 that have reached a laminated state with the spacer 8 sandwiched therebetween is, as shown in Fig. 1 and Fig. 3, formed into an integral casing structure by fastening with a rivet 28 that has penetrated therethrough.

On a back surface of the torque receiving plate 3, as shown in Fig. 3 to Fig. 6, an anchor plate 31 is mounted by fixing with a rivet 32. The anchor plate 31 is connected to the actuator incorporated in the brake caliper to enable driving the friction pad assembly 1A, 1B so as to advance and retract with respect to the disc rotor.

The link plates 5 and 6 are disposed to straddle over a plurality of lining assemblies 13, and make a pressing force from the torque receiving plate 3 act on these lining assemblies 13.
On a face of the torque receiving plate 3 at a side of the link plate 5, 6, a link supporting portion 3a being a concave structure in a curved surface shape to pivotally support each link plate 5, 6 is formed so as to correspond to an almost center of gravity position of each link plate 5, 6.
On the other hand, at an almost center of gravity position of each link plate 5, 6, a single plate abutting curved surface portion 35 that is pivotally supported while abutting against the link supporting portion 3a formed on the torque receiving plate 3 is formed. In the case of the present embodiment, the plate abutting curved surface portion 35 is formed in a convex curved surface that pivotally abuts against a concave curved surface of the link supporting portion 3a.
Also, in the case of the present embodiment, for each link plate 5, 6, the plate abutting curved surface portion 35 being at the almost center of gravity position is pivotally supported while abutting against the torque receiving plate 3, and thus, except for the plate abutting curved surface portion 35, formed between a torque receiving plate 3-side face of the link plate 5, 6 and the torque receiving plate 3 is a space that allows pivoting.

The back plate portion 22 of each lining assembly 13 is, as shown in Fig. 5 and Fig. 6, formed at its center with a link abutting portion 22c in a concave curved surface shape, and an engaging hole 22d for rotation prevention at an off-center position.
In a manner corresponding thereto, each link plate 5, 6 includes, as shown in Fig. 5, a plural number of back plate abutting curved surface portions 37 that abut against the link abutting portions 22c of the back plate portions 22 to pivotably support the lining assemblies 13 thereof, and a rotation restricting portion 38 that is loosely fitted in the engaging hole 22d of the back plate portion 22 to restrict a pivoting behavior of each lining assembly 13.
Also, the link plate 6 is formed with an appropriate number of through-holes 39 in a penetrating condition through the plate face, besides the single plate abutting curved surface portion 35 and the plural number of back plate abutting curved surface portions 37, so as to reduce the weight.

In the case of the present embodiment, the back plate abutting curved surface portions 37 are each formed in a convex curved surface against which the link abutting portion 22c abuts freely rotatably. The rotation restricting portion 38 is formed by bending a projection piece extended at an end portion of the link plate 5, 6 to the engaging hole 22d side.

In the friction pad assembly 1 described in the above, a position restriction of the lining assembly 13 on the torque receiving plate 3 is, in terms of the direction parallel to the disc rotor face of the lining assembly 13, performed by fitting of the plate fitting portion 22a of the lining assembly 13 with the guide hole portion 11a of the guide plate 11, and in terms of the direction orthogonal to the disc rotor face, performed by abutting of the link abutting portion 22c of the lining assembly 13 against the back plate abutting curved surface portion 37 of the link plate 5, 6.
Accordingly, the braking torque that acts on the lining assembly 13 at the time of braking is transmitted to the guide plate 11, and directly transmitted to the torque receiving plate 3 to which the guide plate 11 is fixed.
Moreover, the pressing force that presses the lining assembly 13 against the disc rotor is transmitted from the torque receiving plate 3, via a contact portion between the link supporting portion 3a of the torque receiving plate 3 and the plate abutting curved surface portion 35 of the link plate 5, 6, to the link plate 5, 6, and acts on the lining assembly 13 via a contact portion between the back plate abutting curved surface portion 37 of the link plate 5, 6 and the link abutting portion 22c of the lining assembly 13.

More specifically, the member (guide plate 11) thatreceives the braking torque from the lining assembly 13 and the members (link plate 5, 6 and torque receiving plate 3) that make the pressing force act on the lining assembly 13 are set separately, so that no braking torque to be a large load acts on the contact portion between the lining assembly 13 and the link plate 5, 6 and the contact portion between the link plate 5, 6 and the torque receiving plate 3, which make the pressing force act on the lining assembly 13.
Therefore, it is not necessary to provide each contact portion that transmits the pressing force as a solid engagement such as a ball joint to receive the braking torque, and a cost saving and an improvement in productivity by relaxing the processing accuracy can be realized.

Moreover, in the friction pad assembly 1 described in the above, a reaction force of the pressing force when the friction material 21 is pressed against the disc rotor is, in the case of a size in a normal range, transmitted from the lining assembly 13 through the back plate abutting curved surface portion 37 and the plate abutting curved surface portion 35 of each link plate 5, 6, and received at the torque receiving plate 3. However, when an excessive reaction force is input from the disc rotor, each link plate 5, 6 that has been produced by press working is deformed so as to fill up the space where pivoting is possible with respect to the torque receiving plate 3, and strongly abuts against the torque receiving plate 3.
Therefore, each link plate 5, 6 makes the vicinity of the back plate abutting curved surface portion 37 and the plate abutting curved surface portion 35 contact the torque receiving plate 3, respectively, to transmit the excessive reaction force to the torque receiving plate 3, while breakage of the link plate 5, 6 itself is prevented.

Moreover, in the friction pad assembly 1 described in the above, the outside diameter of the retaining flange portion 22b formed on the back plate portion 22 of the lining assembly 13 is set larger than the guide hole portion 11a of the guide plate 11 to prevent, by catching of the retaining flange portion 22b, the lining assembly 13 from dropping off from the guide plate 11, so that even if the leaf spring 24 is broken, the lining assembly 13 never drops off from the guide plate 11, and a high level of safety is obtained.
Moreover, since no independent dedicated part is added for a drop prevention of the lining assembly 13 from the guide plate 11, occurrence of inconveniences such as an increase in cost caused by an increase in the number of parts and a decline in productivity due to an increase in the number of assembling processes can be avoided.

Moreover, in the friction pad assembly 1 described in the above, for enhancing transmission efficiency of the braking torque when the lining assembly 13 contacts the disc rotor, a pivot restriction of the lining assembly 13 in a plane parallel to the disc rotor face is performed by fitting of the engaging hole 22d formed in the back plate portion 22 of the lining assembly 13 with the rotation restricting portion 38 provided in a protruding condition on the link plate 5, 6. That is, since no independent dedicated part is added for a pivot restriction of the lining assembly 13 in a plane parallel to the disc rotor face, parts are never increased in number for the pivot restriction of the lining assembly 13, and occurrence of inconveniences such as an increase in cost caused by an increase in the number of parts and a decline in productivity due to an increase in the number of assembling processes can be avoided.

Moreover, in the friction pad assembly 1 described in the above, although there is a form of a plural number of lining assemblies 13 planarly laid side by side, the leaf spring 24 arranged so as to be sandwiched between the retaining flange portion 22b of the lining assembly 13 and the guide plate 11 absorbs dimensional tolerance in the thickness direction of the lining assemblies 13, and thus occurrence of unevenness in contact performance of each lining assembly 13 with respect to the disc rotor can be prevented.
Accordingly, stable braking characteristics can be maintained without receiving influence of the dimensional tolerance in the thickness direction of the lining assemblies 13.

Moreover, in the friction pad assembly 1 described in the above, the guide plate 11, the spacer 8, and the torque receiving plate 3 are formed into an integral casing structure by fastening with the rivet 28, whereby a solid casing structure where no loosening occurs due to vibration etc. , can be obtained at a low cost.

Next, another embodiment of a disc brake friction pad assembly according to the present invention will be described.

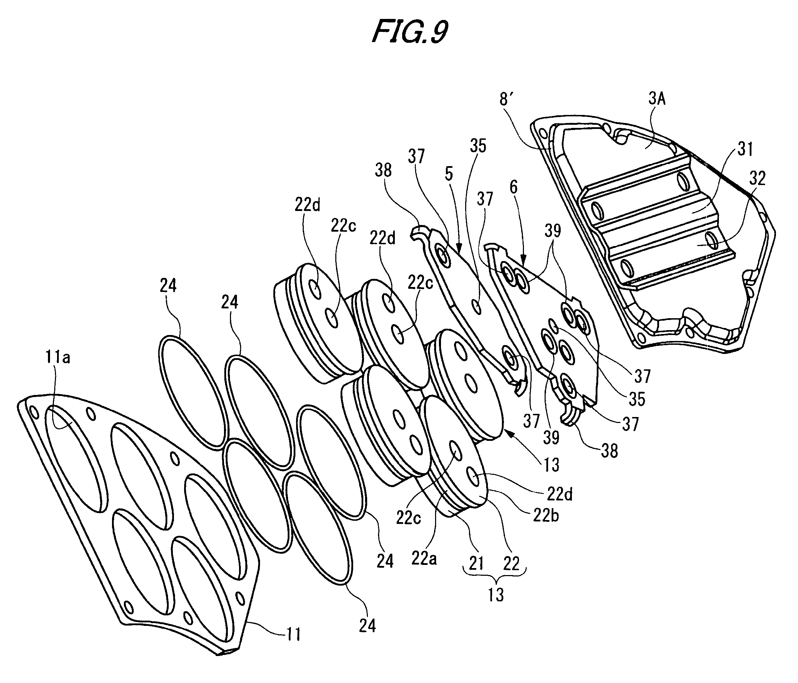

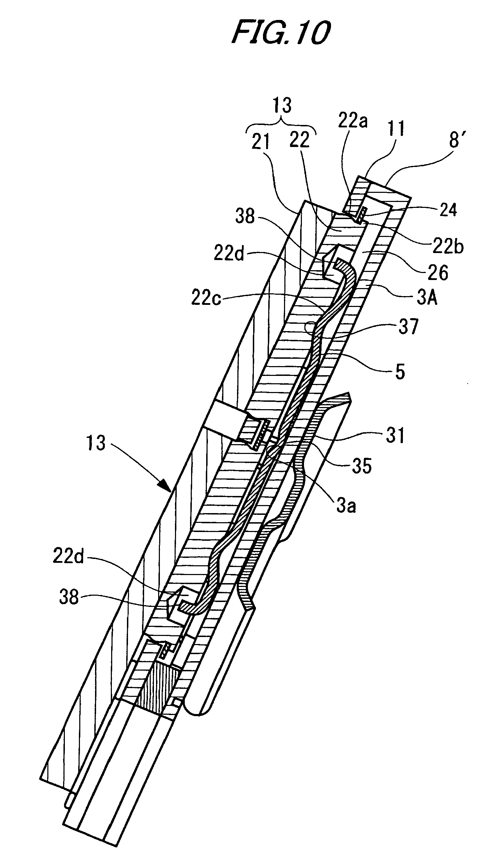

Fig. 9 is an exploded perspective view of the disc brake friction pad assembly in another embodiment, and Fig. 10 is a sectional view in the present embodiment corresponding to Fig. 5 shown in the foregoing embodiment. Also, this embodiment differs only in the shape of the torque receiving plate 3 and is the same in other aspects of the construction as the foregoing embodiment, and thus identical parts will be denoted by identical reference numerals, and a description thereof will be omitted.

A torque receiving plate 3A has a structure where the spacer (see reference numeral 8 in Fig. 6) in the foregoing embodiment is integrally formed. In detail, for the torque receiving plate 3A, a peripheral wall 8' having a height substantially equal to the spacer is formed in a protruding condition on a marginal portion of a plate-like member arranged facing the guide plate 11, and the peripheral wall 8' abuts against the guide plate 11 as shown in Fig. 10 to thereby secure the link housing space 26 that allows arranging the link plate 5, 6 with respect to the back plate portion 22.
By thus integrating the torque receiving plate 3A and the spacer as one body, the number of parts can be reduced to allow a cost reduction, while assemblability can also be improved to be suitable for mass production.
Although, in the above-mentioned embodiment, it has been provided to form the spacer integrally with the torque receiving plate, the spacer may be otherwise formed integrally with the guide plate or as ones formed in a protruding condition integrally with both the torque receiving plate and the guide plate.

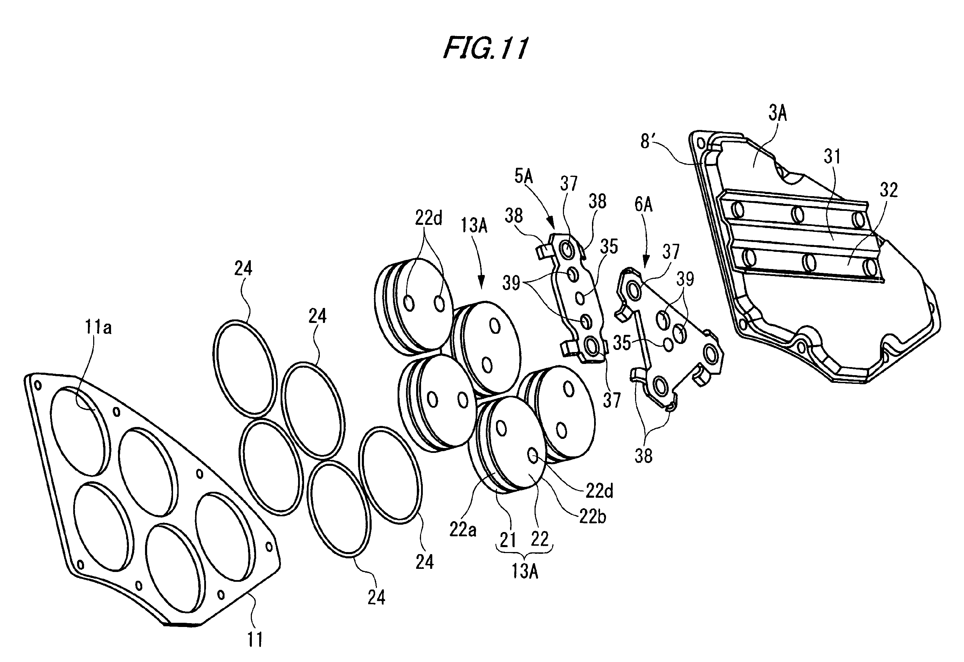

Fig. 11 is an exploded perspective view showing still another embodiment of a disc brake friction pad assembly according to the present invention.
In this embodiment, link plates and lining assemblies partially differ in construction from those of the foregoing embodiment shown in Figs. 9 and 10. Since other aspects of the construction are the same, identical parts will be denoted by identical reference numerals, and a description thereof will be omitted.
Link plates 5A and 6A are disposed to straddle over a plurality of lining assemblies 13A, and a pressing force from the torque receiving plate 3 is made to act on these lining assemblies 13A.
At an almost center of gravity position of each link plate 5A, 6A, a single plate abutting curved surface portion 35 that is pivotally supported while abutting against the link supporting portion 3a formed on the torque receiving plate 3 is formed. In the case of the present embodiment, the plate abutting curved surface portion 35 is formed in a convex curved surface that pivotally abuts against a concave curved surface of the link supporting portion 3a.
Moreover, each link plate 5A, 6A includes a plural number of back plate abutting curved surface portions 37 that abut against the back plate portions 22 to pivotably support the lining assemblies 13A thereof, and a pair of rotation restricting portions 38 that are loosely fitted in the engaging holes 22d of the back plate portions 22 to restrict a pivoting behavior of the lining assemblies 13A.

The back plate abutting curved surface portion 37 is formed in a convex curved surface against which the lining assembly 13A abuts freely rotatably. The pair of rotation restricting portions 38 are formed by bending projection pieces extended at end portions of the link plate 5, 6 to the lining assembly 13A side, respectively.
Also, the link plate 5A, 6A is formed with an appropriate number of through-holes 39 in a penetrating condition through the plate face, besides the single plate abutting curved surface portion 35 and the plural number of back plate abutting curved surface portion 37, to reduce the weight.

The lining assembly 13A is composed of a friction material 21 molded in an almost disc shape and a back plate portion 22 fixedly attached to a back surface of the friction material 21. The back plate member 22 includes a plate fitting portion 22a whose outer circumferential face is pivotally fitted with a circular guide hole portion 11a formed in a penetrating condition through the guide plate 11 and a retaining flange portion 22b having an outside diameter larger than the guide hole portion 11a.
Moreover, in the back plate portion 22 of the lining assembly 13A, the engaging holes 22d for rotation prevention in which the pair of rotation restricting portions 38 of the link plate 5A, 6A are loosely fitted are formed at off-center positions, respectively.
In the case of the present embodiment, the back plate portion 22 is formed only with the pair of engaging holes 22d. That is, the link abutting portion 22c (see Fig. 6 and Fig. 9) in a concave curved surface shape shown in each of the foregoing embodiments is omitted. Accordingly, the back plate abutting curved surface portion 37 of the link plate 5A, 6A abuts against a flat face of the back plate portion 22. Even by such a construction, the link plate 5A, 6A can pivotably support the lining assembly 13A.

Also, in the above-mentioned embodiment, although it has been provided for the link plate 5A, 6A that the back plate abutting curved surface portion 37 is formed in a convex curved surface to abut against the flat back plate portion 22, conversely, it may also be possible to provide the link plate as a flat face, so that a back plate portion formed with a link abutting portion of a convex curved surface or a back plate portion whose entire face at the link plate side is formed as a convex curved surface abuts against the link plate to thereby pivotably support the lining assembly.

Although the present invention has been described in detail and with reference to the specific embodiments, it is apparent to those skilled in the art that various modifications and changes can be made without departing from the scope of the present invention.

### Industrial Applicability:

By the friction pad assembly according to the present invention, a braking torque that acts on the lining assembly at the time of braking is transmitted to the guide plate, and further directly transmitted to the torque receiving plate to which the guide plate is fixed.
Moreover, a pressing force that presses the lining assembly against the disc rotor is transmitted from the torque receiving plate, via a contact portion between the link supporting portion of the torque receiving plate and the plate abutting curved surface portion of the link plate, to the link plate and acts on the lining assembly via a contact portion between the back plate abutting curved surface portion of the link plate and the link abutting portion of the lining assembly.
More specifically, the member that receives the braking torque from the lining assembly and the members that make the pressing force act on the lining assembly are set separately, so that no braking torque to be a large load acts on the contact portion between the lining assembly and the link plate and the contact portion between the link plate and the torque receiving plate, which make the pressing force act on the lining assembly.
Therefore, it is not necessary to provide each contact portion that transmits the pressing force as a solid engagement such as a ball joint to receive the braking torque, and a cost saving and an improvement in productivity by relaxing the processing accuracy can be realized.

## Claims

1. A disc brake friction pad assembly in which a plurality of lining assemblies (13) are pivotally supported on a guide plate (11) that receives a braking torque, and the lining assemblies are pressed against a disc rotor,
wherein each of the lining assemblies includes, in a back plate portion (22) fixedly attached to a back surface of a friction material (21), a plate fitting portion (22a) whose outer circumferential face is pivotally fitted with a guide hole portion (11a) provided in the guide plate and a retaining flange portion (22b) having an outside diameter larger than the guide hole portion,
wherein a leaf spring (24) attached to the plate fitting portion is attached by insertion to the guide hole portion from a back surface side of the guide plate so that the leaf spring is sandwiched between the guide plate and the retaining flange portion,
wherein a braking torque that acts at the time of contact between the disc rotor and the friction material is transmitted from the plate fitting portion to the guide plate,
wherein, between a torque receiving plate (3,3A) attached to the guide plate with a gap secured with respect to the back plate portion and the back plate portion, a plurality of link plates disposed to straddle over ones of the plurality of lining assemblies and for transmitting a pressing force from the torque receiving plate to the lining assemblies are provided, and
wherein each of the link plates (5,5A,6,6A) includes a single plate abutting curved surface portion (35) that abuts to and is pivotally supported on a link supporting portion (3a) of the torque receiving plate, a plurality of back plate abutting curved surfaces portions (37) that abut to respective link abutting portions (22c) at centers of the back plate portions of the lining assemblies to pivotally support the lining assemblies, and rotation restricting portions (38) loosely fitted in respective engaging hole formed at positions apart from the centers of the back plate portions of the lining assemblies to restrict pivoting behaviors of the lining assemblies.

2. The disc brake friction pad assembly according to Claim 1, wherein the guide plate and the torque receiving plate abut to each other with a spacer (8) sandwiched therebetween, and the guide plate and the torque receiving plate are formed into an integral casing structure by fastening with a rivet (28).

3. The disc brake friction pad assembly according to Claim 1 or 2, wherein the spacer is integrally formed with at least either of the torque receiving plate or the guide plate.

4. The disc brake friction pad assembly according to any one of Claims 1 through 3, wherein the plate abutting curved surface portion and a torque receiving plate-side face in a vicinity of the back plate abutting curved surface portion of the link plate abuts to the torque receiving plate, when a reaction force of the friction materials of the lining assemblies pressed against the disc rotor is input beyond a predetermined pressing force range.

## Patentansprüche

1. Scheibenbremsenbelag-Anordnung, bei der eine Vielzahl von Belag-Anordnungen (13) schwenkbar an einer Führungs-Platte (11) gelagert sind, die ein Bremsmoment aufnimmt, und die Belag-Anordnungen an einen Scheiben-Rotor gepresst werden,
wobei jede der Belag-Anordnungen in einem Trägerplatten-Abschnitt (22), der fest an einer hinteren Fläche eines Reibmaterials (21) angebracht ist, einen Platten-Passabschnitt (22a), dessen Außenumfangsfläche schwenkbar in einen Führungsloch-Abschnitt (11a) eingepasst ist, der in der Führungsplatte vorhanden ist, sowie einen Halteflansch-Abschnitt (22b) mit einem Außendurchmesser enthält, der größer als der Führungsloch-Abschnitt ist,
eine Blattfeder (24), die an dem Platten-Passabschnitt angebracht ist, durch Einführen in den Führungsloch-Abschnitt von einer Seite der hinteren Fläche der Führungsplatte her so angebracht wird, dass die Blattfeder zwischen der Führungsplatte und dem Halteflansch-Abschnitt eingeschlossen ist, wobei
ein Bremsmoment, das bei Kontakt zwischen dem Scheiben-Rotor und dem Reibmaterial wirkt, von dem Plattenpass-Abschnitt auf die Führungsplatte übertragen wird,
wobei zwischen einer Momentaufnahme-Platte (3, 3A), die an der Führungs-Platte mit einem in Bezug auf den Trägerplatten-Abschnitt gewährleisteten Zwischenraum und dem Trägerplatten-Abschnitt angebracht ist, eine Vielzahl von Verbindungs-Platten vorhanden sind, die so angeordnet sind, dass sie sich jeweils über entsprechende der Vielzahl von Belag-Anordnungen erstrecken und eine Presskraft von der Momentaufnahme-Platte auf die Belag-Anordnungen übertragen, und
jede der Verbindungs-Platten (5, 5A, 6, 6A) einen einzelnen an der Platte anliegenden gekrümmten Flächenabschnitt, der an einem Verbindungs-Trageabschnitt (3a) der Momentaufnahme-Platte anliegt und schwenkbar daran gelagert ist, eine Vielzahl von an der Trägerplatte anliegenden gekrümmten Flächenabschnitten (37), die an jeweiligen Verbindungs-Anliegeabschnitten (22c) an Mittelpunkten der Trägerplatten-Abschnitte der Belag-Anordnungen anliegen, um die Belag-Anordnungen schwenkbar zu lagern, sowie Drehungseinschränk-Abschnitte (38) enthält, die lose in jeweilige Eingriffslöcher eingepasst sind, die an von den Mittelpunkten der Trägerplatten-Abschnitte der Belag-Anordnungen beabstandeten Portionen ausgebildet sind, um Schwenkbewegungen der Belag-Anordnungen einzuschränken.

2. Scheibenbremsenbelag-Anordnung nach Anspruch 1, wobei die Führungs-Platte und die Momentaufnahme-Platte mit einem zwischen ihnen eingeschlossenen Abstandshalter (8) aneinander anliegen und die Führungs-Platte sowie die Momentaufnahme-Platte durch Befestigen mit einem Niet (28) in einer integralen Gehäusestruktur ausgebildet sind.

3. Scheibenbremsenbelag-Anordnung nach Anspruch 1 oder 2, wobei der Abstandshalter integral wenigstens mit der Momentaufnahme-Platte oder der Führungs-Platte ausgebildet ist.

4. Scheibenbremsenbelag-Anordnung nach einem der Ansprüche 1 bis 3, wobei der an der Platte anliegende gekrümmte Flächenabschnitt und eine Fläche an der Seite der Momentaufnahme-Platte in der Nähe des an der Trägerplatte anliegenden gekrümmten FlächenAbschnitts der Verbindungs-Platte an der Momentaufnahme-Platte anliegen, wenn eine Gegenwirkungskraft der Reibmaterialien der Belag-Anordnungen, die an den Scheiben-Rotor gepresst werden, über einen vorgegebenen Presskraft-Bereich hinaus einwirkt.

## Revendications

1. Ensemble plaquette de frein pour frein à disque, dans lequel une pluralité d'ensembles de revêtement antifriction (13) sont supportés de manière pivotante sur une plaque de guidage (11) qui reçoit un couple de freinage, et les ensembles de revêtement antifriction sont comprimés contre un rotor hélicoïdal,
dans lequel chacun des ensembles de revêtement antifriction comprend, dans une partie de plaque arrière (22) fixée de manière fixe sur une surface arrière d'un matériau à friction (21), une partie de montage de plaque (22a) dont la face circonférentielle externe est montée de manière pivotante avec une partie de trou de guidage (11a) prévue dans la plaque de guidage et une partie de bride de retenue (22b) ayant un diamètre externe supérieur à la partie de trou de guidage,
dans lequel un ressort à lames (24) fixé sur la partie de montage de plaque est fixé par insertion sur la partie de trou de guidage à partir d'un côté de surface arrière de la plaque de guidage de sorte que le ressort à lames est pris en sandwich entre la plaque de guidage et la partie de bride de retenue,
dans lequel un couple de freinage qui agit au moment du contact entre le rotor hélicoïdal et le matériau à friction est transmis de la partie de montage de plaque à la plaque de guidage,
dans lequel, entre une plaque de réception de couple (3, 3A) fixée sur la plaque de guidage avec un espace fixe par rapport à la partie de plaque arrière et la partie de plaque arrière, on prévoit une pluralité de plaques de liaison disposées pour être à califourchon sur des ensembles de la pluralité d'ensembles de revêtement antifriction ou pour transmettre une force de pression de la plaque de réception de couple aux ensembles de revêtement antifriction, et
dans lequel chacune des plaques de liaison (5, 5A, 6, 6A) comprend une seule plaque venant en butée contre une partie de surface incurvée (35) qui vient en butée et est supportée de manière pivotante sur une partie de support de liaison (3a) de la plaque de réception de couple, une pluralité de parties de surfaces incurvées de butée de plaque arrière (37) qui viennent en butée contre des parties de butée de liaison (22c) respectives au niveau des centres de la partie de plaque arrière des ensembles de revêtement antifriction pour supporter de manière pivotante les ensembles de revêtement antifriction, et des parties de limitation de rotation (38) montées sans serrage dans un trou de mise en prise respectif formé dans des positions éloignées des centres des parties de plaque arrière des ensembles de revêtement antifriction pour empêcher les comportements pivotants des ensembles de revêtement antifriction.

2. Ensemble plaquette de frein pour frein à disque selon la revendication 1, dans lequel la plaque de guidage et la plaque de réception de couple viennent en butée l'une par rapport à l'autre avec un dispositif d'espacement (8) pris en sandwich entre elles, et la plaque de guidage et la plaque de réception de couple sont formées dans une structure de boîtier solidaire par fixation, avec un rivet (28).

3. Ensemble plaquette de frein pour frein à disque selon la revendication 1 ou 2, dans lequel le dispositif d'espacement est formé de manière solidaire avec au moins l'une parmi la plaque de réception de couple ou bien la plaque de guidage.

4. Ensemble plaquette de frein pour frein à disque selon l'une quelconque des revendications 1 à 3, dans lequel la partie de surface incurvée de butée de plaque et une face du côté de la plaque de réception de couple à proximité de la partie de surface incurvée de butée de plaque arrière de la plaque de liaison vient en butée contre la plaque de réception de couple, lorsqu'une force de réaction des matériaux à friction des ensembles de revêtement comprimés contre le rotor hélicoïdal est introduite au-delà d'une plage de force de pression prédéterminée.
